# EUROPÄISCHE PATENTSCHRIFT

(11) **EP 1 649 995 B1**
(45) Veröffentlichungstag und Bekanntmachung des Hinweises auf die Patenterteilung: **31.10.2007**
(21) Anmeldenummer: 05019732.6
(22) Anmeldetag: 10.09.2005
(51) Int. Cl.: B29B 7/18, B01F 7/04

(54) **Innenmischer zum Kneten von plastischen Massen**
Internal mixer for kneading plastic materials
Mélangeur interne pour pétrir des matières plastiques

(30) Priorität: 19.10.2004 DE 102004051063
(43) Veröffentlichungstag der Anmeldung: 26.04.2006
(73) Patentinhaber: Harburg-Freudenberger Maschinenbau GmbH, 21079 Hamburg (DE)
(72) Erfinder: Limper, Andreas, 57258 Freudenberg (DE); Keuter, Harald, 57258 Freudenberg (DE); Rinker, Maik, 51645 Gummersbach (DE); Berkemeier, Dieter, 57520 Steinebach/Sieg (DE)
(74) Vertreter: Grosse, Wolf-Dietrich Rüdiger

(56) Entgegenhaltungen:
- EP-A- 0 264 224
- EP-A- 0 266 078
- PATENT ABSTRACTS OF JAPAN Bd. 1998, Nr. 04, 31. März 1998 (1998-03-31) -& JP 09 313916 A (SUZUKA ENG KK), 9. Dezember 1997 (1997-12-09)
- PATENT ABSTRACTS OF JAPAN Bd. 1999, Nr. 12, 29. Oktober 1999 (1999-10-29) & JP 11 188249 A (KUSUNOKI KIKAI SEISAKUSHO:KK), 13. Juli 1999 (1999-07-13)

## Beschreibung

Die Erfindung betrifft einen Innenmischer zum Kneten von plastischen Massen, insbesondere von Kunststoffen, Kautschuk- oder Gummimischungen, mit einem Gehäuse mit einer Mischkammer, mit zwei in der Mischkammer achsparallel angeordneten, gegensinnig antreibbaren Rotoren, die nicht miteinander kämmende Rotorkörper aufweisen, wobei jeder Rotorkörper vier schraubenlinienförmig verlaufende Misch-Flügel aufweist, die an ihrem einen Ende einen stirnseitigen Durchlass zur zugeordneten Stirnwand des Gehäuses begrenzen.

Bei einem derartigen, beispielsweise aus der EP 0 264 224 B1 bekannten Innenmischer weist jeder Rotorkörper zwei lange und zwei kurze Flügel auf, von denen sich die langen Misch-Flügel wenigstens über die Hälfte der axialen Länge der Mischkammer erstrecken und an ihren ausströmseitigen Enden jeweils an der zugeordneten Stirnseite der Rotorkörper enden, während sie an ihren abströmseitigen Enden durch entsprechend breite stirnseitige Durchlässe zur jeweils zugeordneten Stirnwand des Gehäuses begrenzt werden. Der Steigungswinkel der Misch-Flügel, d. h. der Winkel der Misch-Flügel zur Tangente der Rotorkörper, beträgt hier ungefähr 60° bis 70°.

Die Energieeinleitung in das zu mischende Material, vorwiegend also Kautschukmischungen, ist bei diesem als Gummikneter bekannten Innenmischer gut.

Beim Mischen von Kautschuken unterscheidet man das dispersive und das distributive Mischen. Unter dispersivem Mischen versteht man das Zerteilen von Mischungsbestandteilen wie z.B. Rußagglomeraten. Unter distributivem Mischen versteht man das makroskopische Vergleichmäßigen der Mischungsbestandteile innerhalb der Mischkammer.

Das Grundprinzip des z.B. im EP 0 264 224 B1 beschriebenen Innenmischers mitsamt Rotoren basiert darauf, dass die zu mischende Kautschukmischung vor der aktiven Flanke des langen Misch-Flügels intensiv innerhalb eines Wulstes durchmischt wird und bedingt durch den Helixwinkel, dem Winkel der Misch-Flügel zur Achse des Rotors, sowie der Rotation der Rotorkörper axial bis zum Erreichen des freien stirnseitigen Durchlasses in axialer Richtung transportiert wird.

Wie eigene Untersuchungen belegen, strömt mischungsabhängig eine nur geringe Menge der Kautschukmischung, bezogen auf die gesamte, in der Mischkammer befindliche Kautschukmischung, durch den Spalt zwischen den Misch-FlügelSpitzen auf den Rotorkörpern und der Mischkammerwandung. Daraus lässt sich ableiten, dass der dispersive Mischeffekt im Wesentlichen aus der Bewegung der Kautschukmischung vor der aktiven Flanke der langen Misch-Flügel resultiert.

Gemäß der EP 0 264 224 B1 wird nach Durchtritt der Kautschukmischung durch den freien stirnseitigen Durchlass diese durch den folgenden kurzen Flügel axial umgelenkt, so dass die Kautschukmischung dem nächsten langen Misch-Flügel zugeleitet wird, wo sich der Mischvorgang vor der aktiven Flanke wiederholt, in dem das Material wieder überwiegend den langen Misch-Flügel axial entlang strömt und sich gleichzeitig innerhalb eines Wulstes rotationsförmig bewegt. In der Mitte der Mischkammer, wo sich die Rotorkörper tangierend aneinander vorbei bewegen, wird die Kautschukmischung von einer Mischkammerhälfte in die andere übergeben bzw. ausgetauscht. Sowohl durch den Strömungsvorgang des Materials in einer Mischkammerhälfte als auch durch den Materialaustausch zwischen den Rotorkörpern wird eine effektive distributive Mischwirkung erzielt.

Die dispersive Mischwirkung eines Rotorkörpers hängt somit maßgeblich von der Anzahl der zur Verfügung stehenden langen Misch-Flügel, der Gestaltung der Misch-Flügel-Geometrie, der Gestaltung des stirnseitigen freien Durchlasses, der geometrischen Anordnung der Misch-Flügel auf dem Rotorkörper sowie diversen verfahrenstechnischen Betriebsparametern des Innenmischers wie z.B. Füllfaktor, Drehzahl etc. ab. Diese Faktoren bestimmen weiterhin die Höhe der in das Mischgut einleitbaren Energie für ein gegebenes Mischgut und einer gegebenen Mischzeit. Es ist allgemein bekannt, dass dispersive Mischwirkung und Energieeintrag korrelieren. Mit zunehmendem Energieeintrag in ein Mischgut steigen die dispersive Mischwirkung und damit die Qualität der hergestellten Kautschukmischung. Die dispersive Mischwirkung von Rotorkörpern und somit die in die Kautschuk- bzw. Gummimasse einleitbare Energie ist für die Herstellung von Grundmischungen, die noch keine bzw. nicht alle Vernetzungschemikalien enthalten, von besonders großer Bedeutung.

Die distributive Mischwirkung eines Rotorkörpers hängt ebenfalls maßgeblich von der Anzahl der zur Verfügung stehenden langen und kurzen Flügel ab. Mit zunehmender Anzahl von Misch-Flügeln auf einem Rotorkörper wird die Kautschukmischung zunehmend in kleinere Portionen aufgeteilt und axial umgelenkt. Weiterhin sind u. a. die Anordnung der Misch-Flügel, die Helixwinkel, die Gestaltung des stirnseitig freien Durchlasses, ggf. auch an beiden Stirnseiten, und die Wahl der verfahrenstechnischen Betriebsparameter von großer Bedeutung für die distributive Mischwirkung.

Der Erfindung liegt die Aufgabe zugrunde, oben genannten Innenmischer in seiner Rotorgeometrie derart zu verbessern, dass die dispersive Mischwirkung und damit der Energieeintrag sowie die Mischungsqualität bei gleichzeitig guter distributiver Mischwirkung entscheidend erhöht wird.

Diese Aufgabe wird erfindungsgemäß durch die Merkmale des Anspruchs 1 gelöst.

Dadurch, dass jeder der beiden Rotorkörper jeweils vier lange Misch-Flügel aufweist, wird die zu mischende Kautschuk- bzw. Gummimasse in vier Portionen pro Rotorkörper aufgeteilt, wo es auf der aktiven Flanke des jeweiligen Misch-Flügels zu einem intensiven dispersiven Mischeffekt kommt. Die gesamte Länge aller Misch-Flügel pro Rotor ist gegenüber den bekannten Rotorkörpern deutlich erhöht, was zu einem entsprechend höheren Energieeintrag in die Mischung führt

Von Vorteil ist wenn die Misch-Flügel in Form, Abmessung und Position am Umfang der Rotorkörper gleichartig ausgebildet sind.

Es hat sich als vorteilhaft erwiesen, wenn für jeden Misch-Flügel auf dem Rotorkörper das Verhältnis der axialen Länge (I) des stirnseitigen Durchlasses zur axialen Länge (L) der Mischkammer 0,2≤ I/L < 0,5 beträgt.

In vorteilhafter Weise können die Misch-Flügel eine gleiche Form und/oder Länge aufweisen.

Eine gute Mischwirkung lässt sich erzielen, wenn der Helixwinkel der Misch-Flügel mindestens 20° beträgt, vorzugsweise im Bereich zwischen 20° und 35° liegt, wobei die Misch-Flügel einen gleichen Helixwinkel aufweisen können.

Es hat sich als vorteilhaft erwiesen, wenn die Misch-Flügel mindestens zwei Bereiche aufweisen, wobei der Helixwinkel im ersten Bereich größer ist als der im zweiten Bereich. Dabei kann der jeweilige Helixwinkel (α) im ersten Bereich 40° bis 50°, vorzugsweise 45°, und im zweiten Bereich 20° bis 30°, vorzugsweise 26°, betragen.

Die Erfindung ist nachfolgend anhand von in der Zeichnung dargestellten Ausführungsbeispielen näher erläutert. Es zeigen:
- Fig. 1: einen Schnitt durch einen erfindungsgemäßen Innenmischer,
- Fig. 2: eine Abwicklung eines Rotorkörpers des Innenmischers gemäß Figur 1 und
- Fig. 3: eine Abwicklung einer weiteren erfindungsgemäßen Ausführungsform eines Rotorkörpers des Innenmischers gemäß Figur 1.

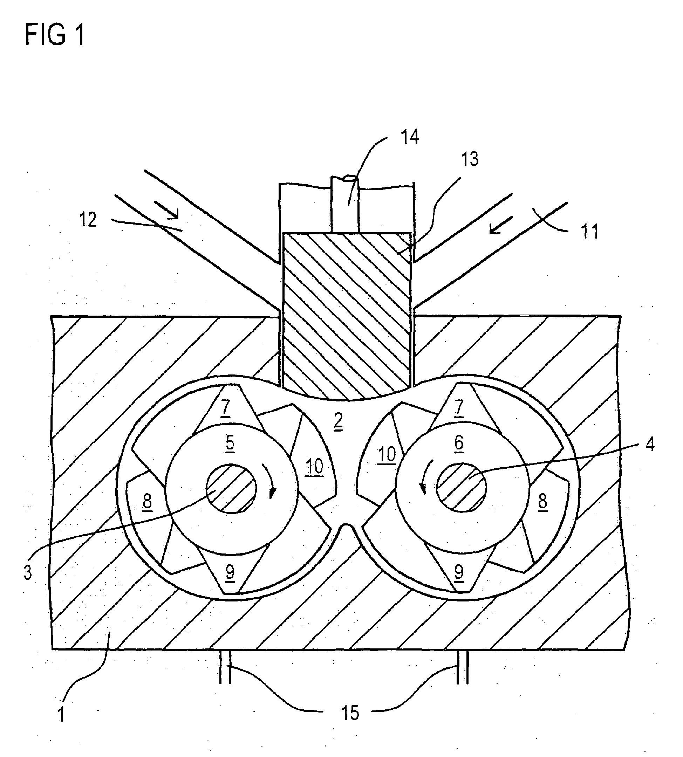

In der Figur 1 ist der Grundaufbau des erfindungsgemäßen Innenmischers mit einem Gehäuse 1 schematisch dargestellt. In dem Gehäuse 1 ist eine Mischkammer 2 angeordnet, welche die Form zweier nebeneinander horizontal liegender Zylinder aufweist, die sich tangieren oder bereichsweise schneiden. In der Mischkammer 2 sind zwei Wellen 3 und 4 mit Rotorkörpern 5 und 6 konzentrisch zu den Zylindern der Mischkammer 2 angeordnet, an denen Misch-Flügel 7 bis 10 angebracht sind.

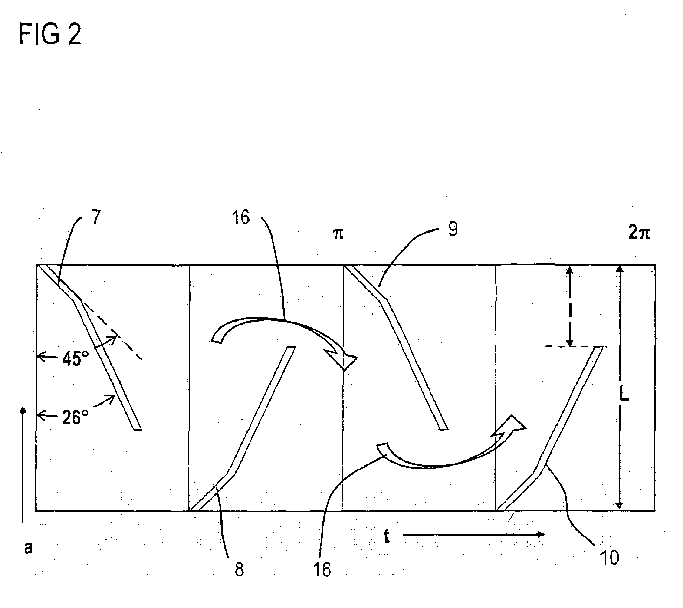

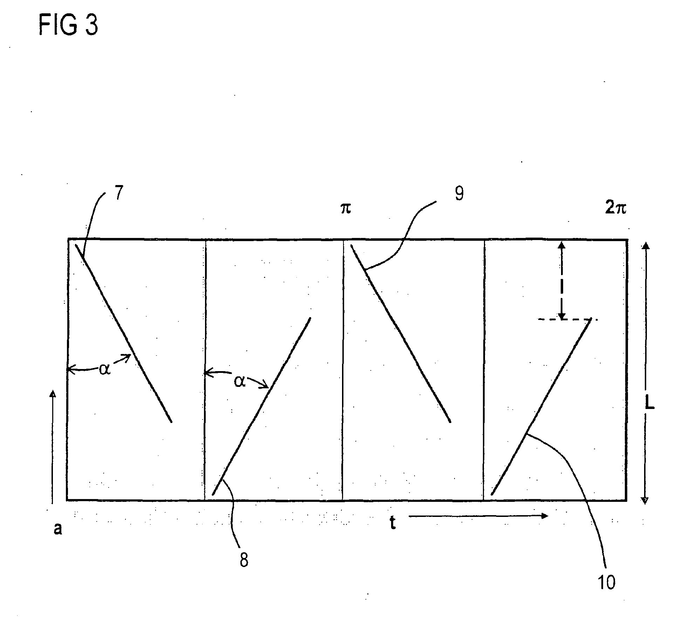

Die Misch-Flügel 7 bis 10 erstrecken sich über mehr als die Hälfte der axialen Länge L der Rotorkörper 5 und 6 und damit der Mischkammer 2, wie dies noch anhand der Figuren 2 und 3 näher erläutert wird. An ihren ausströmseitigen Enden grenzen zwei der Misch-Flügel 7 bis 10 jeweils an der zugeordneten Stirnseite der Rotorkörper 5 und 6, während an ihren abströmseitigen Enden entsprechend breite stirnseitige Durchlässe zur jeweils zugeordneten Stirnwand des Gehäuses 1 begrenzt werden. Bei den beiden anderen Misch-Flügeln sind die Durchlässe zur jeweils zugeordneten Stirnwand des Gehäuses 1 an den ausströmseitigen Enden.

Der Mischkammer 2 kann ein Mischgut über eine erste Zufuhr 11, beispielsweise Polymer und/oder Chemikalien, und über eine zweite Zufuhr 12 Mischbeigaben, wie beispielsweise Ruß und/oder Kreide, oder auf eine ähnliche Weise zugeführt werden. Diese Mischmaterialien werden mittels eines Stempels 13 von oben unter Druck gesetzt. Der Stempel 13 ist beispielsweise über eine Kolbenstange 14 mittels eines nicht dargestellten hydraulischen Arbeitszylinders antreibbar.

Ein Auslass für das Mischgut ist allgemein bekannt und nicht dargestellt. Ebenfalls sind erforderliche Kühlkanäle für das von außen über Leitungen 15 zuführbare Kühlmedium zur besseren Übersicht nicht gezeigt.

In der Figur 2 ist eine vollständige Abwicklung 2π entlang der tangentialen Richtung t eines Rotorkörpers 5 des Innenmischers gemäß Figur 1 dargestellt. Von den Misch-Flügeln 7 bis 10 ist nur der Scheitel dargestellt. Der erste Misch-Flügel 7 beginnt bei 0° auf einer Seite des Rotorkörpers 5 und ragt zu deren Mitte hin. Der zweite Misch-Flügel 8 beginnt bei 90° ± 10° auf der anderen Seite des Rotorkörpers 5 und ist genau umgekehrt ausgerichtet. Der Abstand der folgenden Misch-Flügel 9 und 10 sowie deren Ausrichtungen sind die Gleichen.

Die Misch-Flügel 7 bis 10 weisen in einem ersten Bereich zur axialen Richtung a einen ersten Helixwinkel α von beispielsweise 45° auf. Anschließend in einem zweiten Bereich beträgt der Helixwinkel α nur noch beispielsweise 26°.

Die Misch-Flügel 7 bis 10 erstrecken sich wenigstens über die Hälfte der axialen Länge der Mischkammer und enden an ihren ausströmseitigen Enden jeweils an der zugeordneten Stirnseite der Rotorkörper 5 und 6, während sie an ihren abströmseitigen Enden entsprechend breite stirnseitige Durchlässe zur jeweils zugeordneten Stirnwand des Gehäuses begrenzen.

Vorzugsweise liegt die Länge der Misch-Flügel 7 bis 10 im Bereich von größer 50% bis 80% der axialen Länge der Rotorkörper 5 und 6.

Strömungspfeile 16 zeigen den Verlauf des Mischgutes im Bereich der stirnseitigen Durchlässe zwischen den Enden der Misch-Flügel 8 und 9 und den zugehörigen Stirnwänden der Mischkammer 2, wenn die Rotationsbewegung der Rotorkörper 5 und 6, wie aus Figur 1 ersichtlich, entgegen der tangentialen Richtung t verläuft.

In der Figur 3 ist eine weitere Abwicklung 2π entlang der tangentialen Richtung t einer weiteren Ausführungsform eines Rotorkörpers 5 des Innenmischers gemäß Figur 1 dargestellt. Die Misch-Flügel 7 bis 10 weisen zur axialen Richtung a einen Helixwinkel α auf, der erfindungsgemäß α ≥ 20° sein soll. Im dargestellten Beispiel beträgt er ca. 30°. Die Länge L der Rotorkörper 5, 6 entspricht im Wesentlichen der Länge L der Mischkammer 2. Die Misch-Flügel 7 bis 10 auf dem Rotorkörper 5, 6 weisen eine Länge in axialer Richtung auf, die mehr als die Hälfte der axialen Länge L der Mischkammer beträgt. Das bedeutet, dass das Verhältnis I/L des Abstandes I von Misch-Flügel 7 bis 10 und entsprechende Stirnseite zur axialen Länge L der Mischkammer 0,2 ≤ I/L < 0,5 beträgt.

Durch die jeweils vier ähnlich gestalteten und ähnlich langen Misch-Flügel 7 bis 10 der beiden Rotorkörper mit ähnlichen Helixwinkein α wird die zu mischende Kautschuk- bzw. Gummimasse in vier Portionen pro Rotorkörper aufgeteilt. Vor der aktiven Flanke des jeweiligen langen Misch-Flügels 7 bis 10 wird die zu mischende Kautschukmischung intensiv innerhalb eines Wulstes durchgemischt und bedingt durch die Helixwinkel sowie der Rotation der Rotorkörper axial bis zum Erreichen des freien stirnseitigen Durchlasses in axialer Richtung transportiert, so dass es zu einem intensiven dispersiven Mischeffekt kommt. Die summarische Länge der Misch-Flügel 7 bis 10 ist somit gegenüber den bekannten Rotorkörpern deutlich erhöht, was zu einem entsprechend höheren Energieeintrag in die Mischung führt.

Nach Durchtritt der Kautschukmischung durch den freien stirnseitigen Durchlass gelangt diese an den nächsten langen Misch-Flügel 7 bis 10, wo sich der Mischvorgang vor der aktiven Flanke wiederholt, in dem das Material wieder überwiegend den langen Misch-Flügel 7 bis 10 axial entlang strömt und sich gleichzeitig innerhalb eines Wulstes rotationsförmig bewegt. In der Mitte der Mischkammer 2, wo sich die Rotorkörper tangierend aneinander vorbei bewegen, wird die Kautschukmischung von einer Mischkammerhälfte in die andere übergeben bzw. ausgetauscht. Sowohl durch den Strömungsvorgang des Materials in einer Mischkammerhälfte als auch durch den Materialaustausch zwischen den Rotorkörpern wird eine effektive distributive Mischwirkung erzielt.

Durch die erfindungsgemäße Rotorkörpergeometrie der Misch-Flügel 7 bis 10 des Innenmischers sind die dispersive Mischwirkung und damit der Energieeintrag sowie die Mischungsqualität bei gleichzeitig guter distributiver Mischwirkung gegenüber den bekannten Innenmischern signifikant erhöht.

Bezugszeichenliste
- 1: Gehäuse
- 2: Mischkammer
- 3 und 4: Wellen
- 5 und 6: Rotorkörper
- 7 bis 10: Misch-Flügel
- 11: erste Zufuhr
- 12: zweite Zufuhr
- 13: Stempel
- 14: Kolbenstange
- 15: Leitungen
- 16: Strömungspfeile

- a: axiale Richtung
- t: tangentiale Richtung
- α: Helixwinkel
- 2π: Abwicklung
- L: Länge der Mischkammer/Rotorkörper
- |: Abstandes der Misch-Flügel zur entsprechenden Stirnseite

## Patentansprüche

1. Innenmischer zum Kneten von plastischen Massen, insbesondere von Kunststoffen, Kautschuk- oder Gummimischungen, mit einem Gehäuse (1) mit einer Mischkammer (2), mit zwei in der Mischkammer (2) achsparallel angeordneten, gegensinnig antreibbaren Rotoren, die nicht miteinander kämmende Rotorkörper (5, 6) aufweisen, wobei jeder Rotorkörper (5, 6) vier am Umfang aufeinanderfolgend gegensinnig angeordnete schraubenlinienförmig verlaufende Misch-Flügel aufweist, **dadurch gekennzeichnet, dass** die Misch-Flügel (7 bis 10) sich wenigstens über die Hälfte der axialen Länge (L) der Mischkammer (2) erstrecken wobei die Misch-Flügel (7 bis 10) an ihrem einen Ende einen stirnseitigen Durchlass zur zugeordneten Stirnwand des Gehäuses (1) begrenzen.

2. Innenmischer nach Anspruch 1,
**dadurch gekennzeichnet,**
**dass** die Misch-Flügel (7 bis 10) in Form, Abmessung und Position am Umfang der Rotorkörper (5, 6) gleichartig ausgebildet sind.

3. Innenmischer nach einem der Anspruch 1 oder 2,
**dadurch gekennzeichnet,**
**dass** für jeden Misch-Flügel (7 bis 10) auf dem Rotorkörper (5, 6) das Verhältnis der axialen Länge (I) des stirnseitigen Durchlasses zur axialen Länge (L) der Mischkammer 0,2 ≤ I/L < 0,5 beträgt.

4. Innenmischer nach Anspruch 2 oder 3,
**dadurch gekennzeichnet,**
**dass** die Misch-Flügel (7 bis 10) eine gleiche Länge aufweisen.

5. Innenmischer nach einem der Ansprüche 2 bis 4,
**dadurch gekennzeichnet**
**dass** die Form der Misch-Flügel (7 bis 10) gleich ist.

6. Innenmischer nach einem der Ansprüche 1 bis 5,
**dadurch gekennzeichnet,**
**dass** die Helixwinkel (α) der Misch-Flügel (7 bis 10) im Bereich zwischen 20° und 35° liegen.

7. Innenmischer nach einem der Ansprüche 1 bis 6,
**dadurch gekennzeichnet,**
**dass** die Misch-Flügel (7 bis 10) jeweils gleiche Helixwinkel (α) aufweisen.

8. Innenmischer nach einem der Ansprüche 1 bis 7,
**dadurch gekennzeichnet,**
**dass** die Misch-Flügel (7 bis 10) zwei Bereiche aufweisen, wobei der Helixwinkel (α) im ersten Bereich größer ist als der im zweiten Bereich.

9. Innenmischer nach Anspruch 8,
**dadurch gekennzeichnet,**
**dass** der Helixwinkel (α) im ersten Bereich 40° bis 50° und im zweiten Bereich 20° bis 30° beträgt.

10. Innenmischer nach Anspruch 8 oder 9,
**dadurch gekennzeichnet,**
**dass** der Helixwinkel (α) im ersten Bereich 45° und im zweiten Bereich 26° beträgt.

## Claims

1. An internal mixer for kneading plastic masses, particularly synthetic material mixtures, caoutchouc mixtures or rubber mixtures, with a housing (1) that contains a mixing chamber (2), and with two rotors that are arranged in the mixing chamber (2) in an axially parallel fashion and can be driven in opposite directions, wherein said rotors feature non-intermeshing rotor bodies (5, 6), and wherein each rotor body (5, 6) features four helically extending mixing blades that are successively arranged on the circumference with opposite leads, **characterized in that** the mixing blades (7 to 10) extend over at least half the axial length (L) of the mixing chamber (2), wherein the mixing blades (7 to 10) limit a passage on the face side that extends toward the assigned end wall of the housing (1) on one of their ends.

2. The internal mixer according to Claim 1,
**characterized in**
**that** the mixing blades (7 to 10) are realized identically with respect to their shapes, dimensions and positions on the circumference of the rotor bodies (5, 6).

3. The internal mixer according to Claim 1 or 2,
**characterized in**
**that** the ratio between the axial length (I) of the passage on the face side and the axial length (L) of the mixing chamber amounts to 0.2 ≤ I/L < 0.5 for each mixing blade (7 to 10) on the rotor body (5, 6).

4. The internal mixer according to Claim 2 or 3,
**characterized in**
**that** the mixing blades (7 to 10) have the same length.

5. The internal mixer according to one of Claims 2 to 4,
**characterized in**
**that** the shape of the mixing blades (7 to 10) is identical.

6. The internal mixer according to one of Claims 1 to 5,
**characterized in**
**that** the helix angles (α) of the mixing blades (7 to 10) lie in the range between 20° and 35°.

7. The internal mixer according to one of Claims 1 to 6,
**characterized in**
**that** the respective mixing blades (7 to 10) have the same helix angle (α).

8. The internal mixer according to one of Claims 1 to 7,
**characterized in**
**that** the mixing blades (7 to 10) have two regions, wherein the helix angle (α) is greater in the first region than in the second region.

9. The internal mixer according to Claim 8,
**characterized in**
**that** the helix angle (α) lies between 40° and 50° in the first region and between 20° and 30° in the second region.

10. The internal mixer according to Claim 8 or 9,
**characterized in**
**that** the helix angle (α) is 45° in the first region and 26° in the second region.

## Revendications

1. Malaxeur interne, pour malaxer des masses plastiques, notamment des matières plastiques, des mélanges de caoutchouc et de gomme, avec un carter (1) avec une chambre de malaxage (2), avec deux rotors, disposés de façon parallèle à l'axe dans la chambre de malaxage (2), susceptibles d'être entraînés en sens contraire, comportant des corps de rotor (5, 6) qui ne s'engrènent pas l'un dans l'autre, chaque corps de rotor (5, 6) comportant quatre pales de malaxage s'étendant en forme d'hélice, disposées successivement à contresens sur la périphérie, **caractérisé en ce que** les pales de malaxage (7 à 10) s'étendent au moins sur la moitié de la longueur axiale (L) de la chambre de malaxage (2), les pales de malaxage (7 à 10) délimitant sur leur extrémité un passage côté frontal vers la paroi frontale associée du carter (1).

2. Malaxeur interne selon la revendication 1,
**caractérisé en ce que**
au niveau de leur forme, de leurs dimensions et de leur position sur la périphérie des corps de rotor (5, 6), les pales de malaxage (7 à 10) sont conçues de façon similaire.

3. Malaxeur interne selon l'une quelconque des revendications 1 ou 2,
**caractérisé en ce que**,
pour chaque pale de malaxage (7 à 10) sur le corps de rotor (5, 6), le rapport de la longueur axiale (I) du passage côté frontal à la longueur axiale (L) de la chambre de malaxage est de 0,2 ≤ I/L < 0,5.

4. Malaxeur interne selon la revendication 2 ou 3,
**caractérisé en ce que**
les pales de malaxage (7 à 10) présentent une longueur identique.

5. Malaxeur interne selon l'une quelconque des revendications 2 à 4,
**caractérisé en ce que**
la forme des pales de malaxage (7 à 10) est identique.

6. Malaxeur interne selon l'une quelconque des revendications 1 à 5, **caractérisé en ce que**,
les angles de l'hélice (α) des pales de malaxage (7 à 10) sont de l'ordre de 20° à 35°.

7. Malaxeur interne selon l'une quelconque des revendications 1 à 6,
**caractérisé en ce que**
les pales de malaxage (7 à 10) présentent des angles d'hélice (α) identiques.

8. Malaxeur interne selon l'une quelconque des revendications 1 à 7,
**caractérisé en ce que**
les pales de malaxage (7 à 10) comportent deux zones, l'angle d'hélice (α) dans la première zone étant supérieur à celui dans la deuxième zone.

9. Malaxeur interne selon la revendication 8,
**caractérisé en ce que**
l'angle d'hélice (α) est de 40° à 50° dans la première zone et de 20° à 30° dans la deuxième zone.

10. Malaxeur interne selon la revendication 8 ou 9,
**caractérisé en ce que**
l'angle d'hélice (α) est de 45° dans la première zone et de à 26° dans la deuxième zone.
